# EUROPEAN PATENT SPECIFICATION

(11) **EP 1 615 131 B1**
(45) Date of publication and mention of the grant of the patent: **18.10.2006**
(21) Application number: 04254555.8
(22) Date of filing: 29.07.2004
(51) Int. Cl.: G06F 11/14, H04L 29/12

(54) **System and method for archiving data in a clustered environment**
Vorrichtung und Verfahren zur Datenarchivierung in einem Clustersystem
Système et procédé d'archivage de données dans une grappe d'ordinateurs

(30) Priority: 13.05.2004 US 845734
(43) Date of publication of application: 11.01.2006
(73) Proprietor: BakBone Software Inc., San Diego, California 92121 (US)
(72) Inventor: Helliker, Fabrice, BH18 8NE Dorset (GB); Chappell, Simon, BH9 1TS Dorset (GB); Barnes, Lawrence, Verwood BH31 6TY, Dorset (GB)
(74) Representative: Round, Edward Mark

(56) References cited:
- US-A1- 2003 120 751
- KOSACEK M ET AL: "High-Availability Clustering Capabilities" POWER SOLUTIONS, [Online] May 2003 (2003-05), pages 51-55, XP002319638 Retrieved from the Internet: URL:ftp1.jp.dell.com/app/2qSE-Kos.pdf> [retrieved on 2005-02-25]
- VERITAS SOFTWARE CORP.: "Using Backup Exec(tm) For Windows NT (r) with Microsoft (r) Cluster Server" WHITEPAPER, [Online] 1999, XP002319639 Retrieved from the Internet: URL:http://ftp.support.veritas.com/pub/sup port/products/Backup_Exec_for_WindowsNT/24 7547.pdf> [retrieved on 2005-02-25]

## Description

### FIELD OF THE INVENTION

The present invention relates generally to the archiving of computer data. More particularly, the present invention relates to the archiving of computer data in a clustered network environment.

### BACKGROUND OF THE INVENTION

For a number of decades, information has been shared among computers in many various forms. One popular form that facilitates information sharing is known as the client/server model, which is commonly realized as a client/server network. In a client/server network, a server application is a software program (residing on one or more pieces of computer hardware) that awaits and fulfills requests from any number of client applications. Server applications often manage the storage of data, to which one or many client applications have secure access.

As the client/server network increased in popularity the technology also advanced to enable a large number of client applications to access a single server application. This ability also increased the reliance on the server application and the need to reduce server failures. The technology further advanced to enable the seamless activation of a secondary server system in the event of failure of the main server system. This seamless activation process transfers all active applications from the main server system to the secondary server system without client awareness. This transfer process is typically known in the art as "failover" or "failing over," which is taught in U.S. Pat. No. 6,360,331 titled METHOD AND SYSTEM FOR TRANSPARENTLY FAILING OVER APPLICATION CONFIGURATION INFORMATION IN A SERVER CLUSTER. The applications that are configured to failover from a main server system to a secondary server system (or from a first node to a second node) are known in the art as "clustered applications." A clustered application is configured to be associated as a shared resource having a virtual Internet Protocol ("IP") address. The virtual IP address does not change and is not dependent on the physical location, thus allowing continued client communication to a clustered application despite the event of a failure.

The process of failing over increases the difficulty to accurately archive and restore data. During the archive process the archiving system will schedule what is known in the art as a "backup job," which identifies a particular application, a file system, a drive, or the like, for archiving. When a backup job is activated, the archiving system must be aware of the physical location and specific configuration of the application to be archived. Therefore, if a backup job is activated to archive an application on node A and the application fails over to node B, the archiving job will fail because the application is no longer active on node A.

Accordingly, there is a need for a data archiving system and method that enables archiving of clustered applications.

By way of background, US 2003/120751 describes using multiple storage devices/media as a virtual storage device, which is attached to a computer network. Each storage medium/device stores some data. The remaining free space of each storage medium/device is aggregated into a shared storage volume, which can then be mounted by any computers on the network. This can be implemented in a peer-to-peer manner, so that the free space on the storage devices or storage media in each computer is used to create a shared storage volume. Provisions are made to store multiple copies of each part of the data on the shared storage volume over multiple computers. This builds redundancy into the system. If a volume that is part of the shared storage volume fails, then the shared data that was stored on that volume is instead accessed from one of the copies.

"High-Availability Clustering Capabilities" (Kosacek et al; Power Solutions, [on-line] May 2003 (2003-05) pp 51-55) describes the use of Microsoft Windows Server 2003 when it is running on cluster of Dell Power Edge Servers. The enhancements discussed in the article include the higher availability achieved by moving applications or services from a failed node to another node in the cluster. Another enhancement discussed is the greater scalability allowed by an increased number of nodes per cluster. Also, the article discusses the enhancement that a cluster of nodes, rather than just a single node, can be managed at the same time to provide simpler administration options.

The Microsoft cluster service that is discussed allows a virtual server to "fail over" between multiple physical servers running the cluster service. Through the use of a virtual IP, the physical node being used can "fail over" to another node without the end user being affected. Manual "fail over" can be used to allow maintenance of the nodes when necessary.

Also discussed is the backup and restore configurations afforded by the hardware/software combination. The backup utility can back up the cluster configuration and restore that configuration both locally and to all cluster nodes. Cluster nodes can also be restored automatically if their local cluster database is damaged, or if the system disk fails or becomes corrupted. This automatic process can also help restore shared disks.

### BRIEF SUMMARY OF THE INVENTION

Embodiments of the current invention comprise a method for archiving data for a clustered application according to claim 1 and a corresponding system according to claim 8 and computer program product according to claim 10.

A practical data archiving system according to the present invention includes at least one archiving client application, at least one corresponding archiving server application, and at least one corresponding virtual client application. Specifically, the archiving system utilizes a virtual client application that facilitates the configuration and process in which archiving is performed for a specific clustered application. The use of a virtual client application for a clustered application enables the clustered application to failover to a new node, while preserving the ability to archive the failed-over clustered application. In practice, the setup process of the archiving system creates the virtual client application such that the virtual client application contains a virtual IP address, which can be referenced by each archiving client application in the archiving system.

The above and other aspects of the present invention may be carried out in one form by a method for archiving data for a clustered application in a clustered network environment. The method involves: generating a location request for the clustered application, the location request including a floating identifier for the clustered application; obtaining a physical location identifier for the clustered application in response to the location request; accessing archiving configuration files corresponding to the clustered application; and archiving data for the clustered application in accordance with the archiving configuration files.

### BRIEF DESCRIPTION OF THE DRAWINGS

A more complete understanding of the present invention may be derived by referring to the detailed description and claims when considered in conjunction with the following Figures, wherein like reference numbers refer to similar elements throughout the Figures.
FIG. 1 is a schematic representation of an example clustered network environment;
FIG. 2 is a schematic representation of a portion of an example archiving system that may be deployed in a clustered network environment;
FIG. 3 is schematic representation of an example server component that may be utilized in an archiving system;
FIG. 4 is a schematic representation of an example virtual client application that may be utilized in an archiving system;
FIG. 5 is a schematic representation of an example client application that may be utilized in an archiving system; and
FIG. 6 is a flow diagram of a clustered application backup process that may be performed by an archiving system.

### DETAILED DESCRIPTION OF A PREFERRED EMBODIMENT

The present invention may be described herein in terms of functional block components and various processing steps. It should be appreciated that such functional blocks may be realized by any number of hardware, software, and/or firmware components configured to perform the specified functions. For example, the present invention may employ various integrated circuit components, memory elements, logic elements, look-up tables, and the like, which may carry out a variety of functions under the control of one or more microprocessors or other control devices. In addition, those skilled in the art will appreciate that the present invention may be practiced in conjunction with any number of practical computer hardware implementations and that the particular system architecture described herein is merely one exemplary application for the invention.

It should be appreciated that the particular implementations shown and described herein are illustrative of the invention and its best mode and are not intended to otherwise limit the scope of the invention in any way. Indeed, for the sake of brevity, conventional techniques and aspects of computer devices, computer networks, data transmission, data archiving, data communication and storage, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical embodiment.

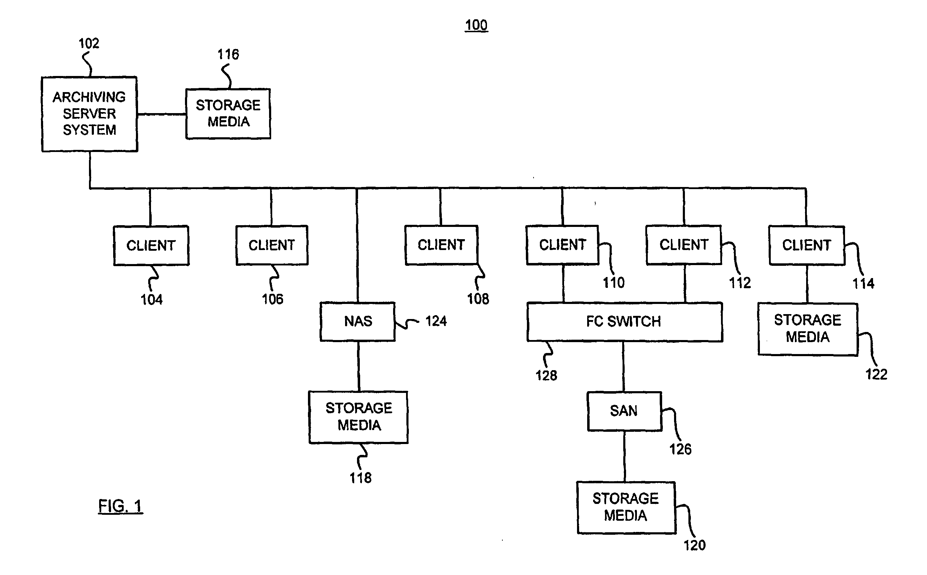

FIG. 1 is a schematic representation of an example clustered network environment 100 that may incorporate the present invention. For ease of illustration, clustered network environment 100 represents a simplified architecture; a practical architecture may have additional and/or alternative physical and logical elements. Clustered network environment 100 generally includes an archiving server system 102, a number of client components 104, 106, 108, 110, 112, and 114, and a number of storage media devices 116, 118, 120, and 122. One or more of the storage media devices may be associated with network-accessed storage ("NAS") 124. Alternatively (or additionally), one or more of the storage media devices may be associated with a storage area network ("SAN") 126. As with conventional SAN arrangements, client component 110 and client component 112 share storage resources via an FC switch 128.

In FIG. 1, archiving server system 102, the client components, and the storage media devices represent physical hardware components. Archiving server system 102 is a computer configured to perform the archiving server application tasks described herein (and possibly other tasks), while the client components are computers configured to perform tasks associated with any number of clustered applications that require data archiving (backup). The client components may also be configured to perform the archiving client application tasks described herein (and possibly other tasks). For example, client component 104 may be the primary node for a clustered email server application, client component 106 may be a failover node for the clustered email server application, and archiving server system 102 may be responsible for the backup and restore procedures for the clustered email server application. A single clustered application may be supported by any number of client component nodes, however, in most practical deployments, each clustered application has one devoted primary node and one devoted failover node. For purposes of the example embodiment described herein, no clustered applications reside at archiving server system 102. A practical embodiment, however, need not be so limited.

As used herein, a "node" refers to a physical processing location in the network environment. In this regard, a node can be a computer or some other device, such as a printer. In practical networks, each node has a unique network address, sometimes called a Data Link Control ("DLC") address or Media Access Control ("MAC") address.

A "server" is often defined as a computing device or system configured to perform any number of functions and operations associated with the management, processing, retrieval, and/or delivery of data, particularly in a network environment. Alternatively, a "server" or "server application" may refer to software that performs such processes, methods, and/or techniques. As in most commercially available general purpose servers, a practical server component that supports the archiving system of the invention may be configured to run on any suitable operating system such as Unix, Linux, the Apple Macintosh OS, or any variant of Microsoft Windows, and it may employ any number of microprocessor devices, e.g., the Pentium family of processors by Intel or the processor devices commercially available from Advanced Micro Devices, IBM, Sun Microsystems, or Motorola.

The server processors communicate with system memory (e.g., a suitable amount of random access memory), and an appropriate amount of storage or "permanent" memory. The permanent memory may include one or more hard disks, floppy disks, CD-ROM, DVD-ROM, magnetic tape, removable media, solid state memory devices, or combinations thereof. In accordance with known techniques, the operating system programs and the server application programs reside in the permanent memory and portions thereof may be loaded into the system memory during operation. In accordance with the practices of persons skilled in the art of computer programming, the present invention is described below with reference to symbolic representations of operations that may be performed by the various server components or the client components. Such operations are sometimes referred to as being computer-executed, computerized, software-implemented, or computer-implemented. It will be appreciated that operations that are symbolically represented include the manipulation by the various microprocessor devices of electrical signals representing data bits at memory locations in the system memory, as well as other processing of signals. The memory locations where data bits are maintained are physical locations that have particular electrical, magnetic, optical, or organic properties corresponding to the data bits.

When implemented in software, various elements of the present invention (which may reside at the client devices or at the archiving server system 102) are essentially the code segments that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

In practical applications, the archiving server system and the client components may be configured in accordance with any known computer platform, e.g., Compaq Alpha Tru64, FreeBSD, HP-UX, IBM AIX, Linux, NCR MP-RAS, SCO OpenServer, SCO Unixware, SGI Irix, Solaris (Spare), Solaris (Intel), Windows 2000, Windows NT, and Novell Netware. In practical applications, the storage media devices may be configured in accordance with any known tape technology (DLT, 8 mm, 4 mm DAT, DTF, LTO, AIT-3, SuperDLT, DTF2, and M2), or any known optical disc technology (DVD-RAM, CD, or the like). In practical applications, clustered network environment 100 can support a number of SAN/NAS devices, e.g., Ancor, Brocade, Chaparral, Crossroads, EMC, FalconStor, Gadzoox, Network Appliance, and Vixel. For the sake of brevity, these conventional devices and platforms will not be described herein.

As in conventional clustered network environments, the operating systems of archiving server system 102 and the client components are capable of handling clustered applications. In other words, a clustered application can failover from one client node to another client node (assuming that the failover node supports that clustered application), and the clustered application is uniquely identified by a floating identifier that does not change with its physical location. In practical applications, this floating identifier is a virtual IP address that is assigned to the clustered application, and that virtual IP address identifies the particular clustered application regardless of its physical node location. "IP address" is used in its conventional sense herein, namely, an IP address is an identifier for a computer or device on a TCP/IP compatible network. Messages are routed within such networks using the IP address of the desired destination. In accordance with current standards, the format of an IP address is a 32-bit numeric address written as four numbers separated by periods, where each number can be 0 to 255. For example, 1.234.56.789 could be an IP address.

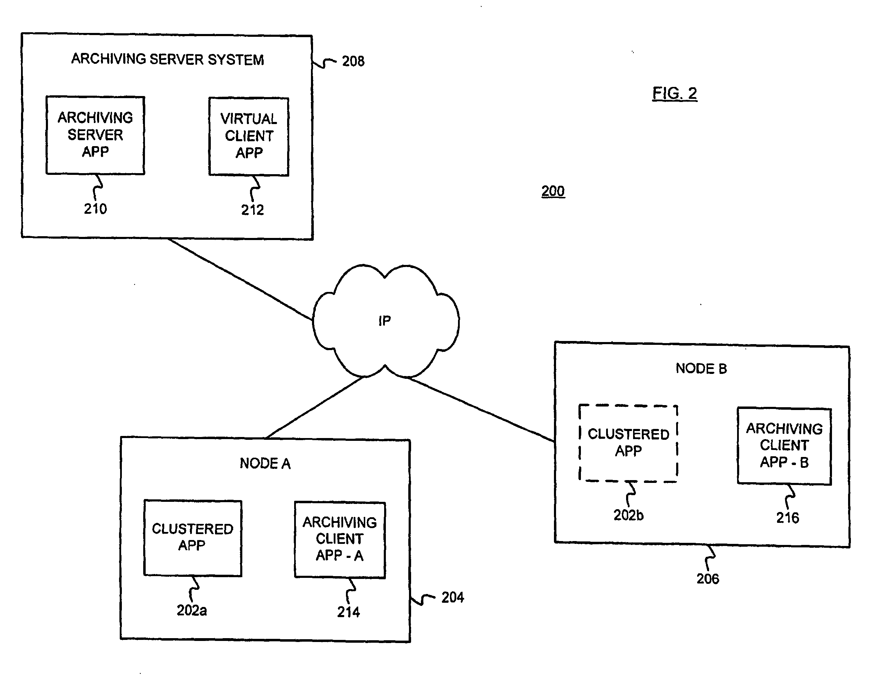

FIG. 2 is a schematic representation of a portion of an example archiving system 200 that may be deployed in a clustered network environment. The portion shown in FIG. 2 represents the functional components that support archiving of a single clustered application 202 that is supported by at least two client component nodes: node A (reference number 204) and node B (reference number 206). The following description of archiving system 200 can be extended to contemplate any number of compatible client nodes. Furthermore, a practical implementation can support any number of different clustered applications.

Archiving system 200 generally includes an archiving server system 208, client node 204, and client node 206, which are all interconnected for data communication in accordance with well known standards and protocols. In one practical embodiment, archiving system 200 is compatible with the Internet Protocol ("IP") suite of protocols for communications between archiving server system 208 and client nodes 204/206, and between client node 204 and client node 206. Of course, archiving system 200 and/or the clustered network environment may utilize additional or alternative communication techniques, protocols, or methods for archiving and other purposes.

In the example embodiment, archiving server system 208 is implemented in one physical node. Archiving server system 208 includes an archiving server application 210 and a virtual client application 212 for clustered application 202. Archiving server system 208 preferably includes or communicates with one or more suitably configured storage media elements (see FIG. 1), which can store archived data in addition to other data utilized by the system. Archiving server application 210 is suitably configured to communicate with the various archiving client applications and to otherwise manage the archiving tasks described herein. As described in more detail below, a practical archiving server system 208 may include a plurality of virtual client applications for a like plurality of clustered applications. In the example embodiment, a different virtual client application is created for each different clustered application serviced by archiving server system 208.

For purposes of this example, client node 204 will be considered the "primary" or "normal" operating node for clustered application 202, while client node 206 will be considered the failover node. In other words, clustered application 202a normally executes at client node 204, and clustered application 202b executes in failover mode at client node 206. In accordance with known clustering techniques, clustered application 202 can be redundantly installed at both client nodes 204/206, and clustered application 202b can be activated upon notice of a failover. In the context of the archiving system described herein, client nodes 204/206 can be identical in configuration and function.

Client node 204 includes an archiving client application 214, which is suitably configured to perform archiving, backup, and restore functions in conjunction with archiving server system 208. In this regard, archiving client application 214 is specifically configured to support the archiving, backup, and restore needs of clustered application 202. Furthermore, archiving client application 214 is capable of supporting any number of different clustered applications. In response to a failover of clustered application 202a, client node 206 becomes the active node and clustered application 202b is activated at client node 206. At this point, archiving client application 214 no longer manages the archiving, backup, and restore needs of clustered application 202. Rather, an archiving client application 216 resident at client node 206 assumes responsibility for those needs. As described in more detail below, archiving client application 216 may be pre-installed at client node 206 and ready for activation at failover. Alternatively, archiving client application 216 can be installed "on the fly" from any suitable location in the clustered network environment in response to the failover. Use of different archiving client applications is desirable so that archiving system 200 can perform archiving jobs with the archiving client applications regardless of the physical location of clustered application 202 and so that archiving system 200 can be deployed in a modular fashion. In accordance with known clustering techniques and procedures, clustered application 202 can failover and failback between client nodes 204/206 at any time (and even during a backup or restore process).

In the example embodiment, archiving server application 210 or virtual client application 212 can install or activate archiving client applications on each node that can receive a clustered application supported by archiving system 200. Virtual client application 212 and/or archiving server application 210 facilitates the storing and handling of archiving configuration files by archiving server system 208. The archiving configuration files are associated with the particular clustered application (the archiving configuration files for a clustered application dictate the manner in which that clustered application is archived or backed up by archiving system 200). Furthermore, virtual client application 212 and/or archiving server application 210 facilitates the storing and handling of the clustered application data, i.e., the actual data to be archived and/or restored. The actual archiving, backup, and restoring of clustered application data is managed by archiving server application 210 and carried out by the respective archiving client application in accordance with the particular archiving configuration files accessed by virtual client application 212.

When an archive job is activated, archiving server application 210 will obtain the floating identifier for the specific clustered application 202 from the virtual client application 212. Archiving server system 200 then sends a location request for clustered application 202. In practical embodiments, this location request includes the floating identifier of the specific clustered application 202. Since the floating identifier moves with the clustered application, the archiving client application that responds to the location request will be the archiving client application that resides at the same physical location as the clustered application 202. Archiving system 200 will then cause the respective archiving client application to utilize stored configuration files for the clustered application, thus eliminating the need to determine whether the current client node has changed or whether a failover has occurred.

In the example shown in FIG. 2, archiving server system 208 resides on one physical computing node, while clustered application 202 currently resides on node 204, which is configured for normal operation of clustered application 202. Clustered application 202 is capable of failing over to a third physical node 206, which is configured for failover operation of clustered application 202. During the initial configuration of archiving system 200, archiving server application 210 will create virtual client application 212 corresponding to clustered application 202. As described in more detail below, virtual client application 212 preferably contains a virtual client name, the name of clustered application 202, a naming address assigned to clustered application 202, and a list of available failover nodes for clustered application 202. In practical embodiments, virtual client application 212 is a relatively "thin" application and it need not be configured to handle the actual archiving and restore tasks that are otherwise carried out by archiving client applications 214/216. Rather, virtual client application 212 is primarily utilized to manage the storage of data for the archiving system and to monitor the physical location of the respective clustered application.

Archiving server application 210 configures archiving client application 214 on node 204 and archiving client application 216 on node 206. In other words, the respective archiving client applications are installed or activated at their client nodes. Archiving system 200 may also update a list of configured archiving client applications, which is contained in virtual client application 212. Once the backup job is configured, archiving server application 210 may communicate with virtual client application 212, which in turn attempts to determine the current physical location of clustered application 202. When the archiving client application that resides on the same node as clustered application 202 receives an appropriate message generated in response to a backup job request, it responds to archiving server application 210 with information regarding its physical location.

As described above, virtual client application 212 is suitably configured to obtain, from one of the available client nodes, a physical location identifier (e.g., the machine name assigned to the node, a physical IP address for the node, or any unique identifier for the node) for clustered application 202. Thereafter, virtual client application 212 can access archiving configuration files (and possibly other information) for the clustered application. This method enables archiving server application 210 to identify the physical node location of clustered application 202 without having to constantly monitor for a change in physical node location or failover. More specifically, archiving server application 210 communicates with virtual client application 212, which resolves the physical node of clustered application 202 such that in the event node 204 fails and clustered application 202 fails over to node 206, archiving server system 208 will not be adversely affected.

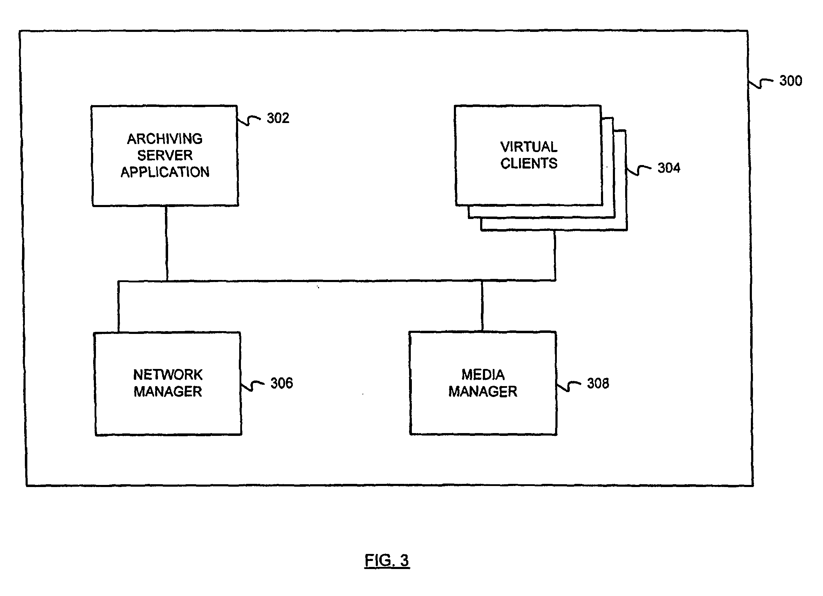

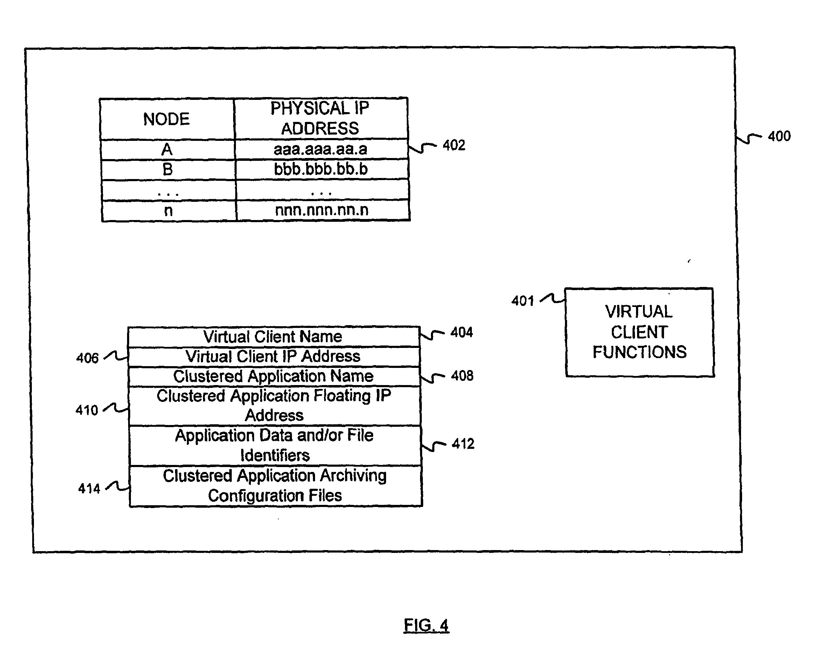

FIG. 3 is schematic representation of an example archiving server system 300 that may be utilized in archiving system 200, or utilized in clustered network environment 100. As described above in connection with archiving server system 208, system 300 includes an archiving server application 302 that manages the archiving, backup, and restore functions described herein. In a practical implementation, a single archiving system can be flexibly configured to support any number of clustered (and non-clustered) applications. Accordingly, archiving server system 300 is depicted with a plurality of virtual client applications 304. In one example embodiment, archiving server system 300 supports *N* different clustered applications with *N* different virtual client applications 304, and each virtual client application 304 is suitably configured for interaction with only one clustered application. Such a design enables scalable operation in small or large environments, facilitates a modular deployment of archiving client applications, and facilitates communication between a clustered application and its virtual client application (which, in practical embodiments, share a common name).

Archiving server system 300 also includes a network manager 306 and a media manager 308. Network manager 306 handles communications with other systems, subsystems, and components in the clustered network environment via one or more network paths, communication links, or the like. Network managers are known to those skilled in the art and details of their operation are not addressed herein. Media manager 308 handles the various media storage devices in the clustered network environment. For example, media manager 308 monitors and/or handles the availability of the storage devices, the type of storage media utilized by the devices, the physical location of the storage devices, which client nodes have access to the storage devices, and how best to actually store the clustered application data. These elements may be controlled by archiving server application 302 and/or by the operating system resident at the node upon which archiving server system 300 is installed.

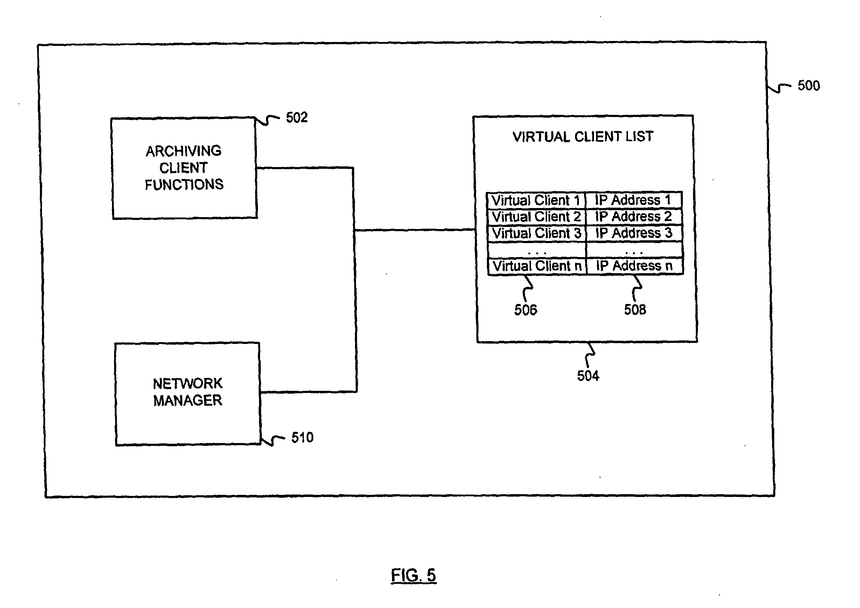

FIG. 4 is a schematic representation of an example virtual client application 400 that may be utilized in an archiving system such as system 200. For purposes of this description, virtual client application 400 is intended to support only one clustered application in the network environment. As mentioned above, virtual client application 400 preferably resides at the same node location as the respective archiving server application. Virtual client application 400 performs a variety of virtual client functions 401 as described herein. For example, virtual client application 400 stores the name of the clustered application, stores the floating IP address of the clustered application, stores information related to the clustered application (such as the clustered application's type), stores a list of nodes upon which archiving client applications are installed, and is capable of smartly reporting on stored data.

Virtual client application 400 includes, maintains, or accesses a table or list 402 of client nodes configured with an archiving client application compatible with the archiving system. The list 402 can have any number of entries, and it may be a static list generated at the time of installation/set-up, a dynamic list that is created and updated as archiving client applications are installed "on the fly" in response to a backup/restore job, or a combination of both. For example, client node A is uniquely identified by a physical IP address and/or a first machine name, and client node B is uniquely identified by a different physical IP address and/or a second machine name. List 402 enables virtual client application 400 to identify the physical node for a clustered application based upon the physical IP address or machine name of the node.

Virtual client application 400 may also include, maintain, or access other information, data, files, and/or identifiers utilized by the archiving system. For example, the following elements may be suitably associated with virtual client application 400: a virtual client name 404, a virtual client identifier (e.g., an IP address) 406, the name 408 of the respective clustered application, a floating identifier (e.g., an IP address) 410 for the respective clustered application, application data and/or file identifiers that represent archived data/files for the clustered application (reference number 412), and archiving configuration files 414 for the clustered application. The virtual client name 404 may be a simple alphanumeric name for virtual client 400, e.g., a word or a phrase that uniquely identifies virtual client 400. The virtual client identifier 406 is a lower level identifier, e.g., an IP address, formatted for compatibility with the communication protocols used in the clustered network environment. The virtual client identifier 406 enables the archiving client applications in the clustered network environment to identify and communicate with the proper virtual client application (a single archiving client application can support any number of clustered applications and, therefore, communicate with any number of virtual client applications). As described above, the floating identifier 410 may be a virtual IP address that uniquely identifies the clustered application. Virtual client application 400 utilizes floating identifier 410 to determine the physical location of the respective clustered application. The name 408 and/or floating identifier 410 of the clustered application also enables a single archiving client application to communicate with a plurality of virtual client applications.

Clustered application archiving configuration files 414 dictate the manner in which the clustered application data is backed up and/or restored, describe protocols for carrying out the backup/restore, indicate the status of the last backup and/or restore, and may be associated with other common functionality known in the art. In practice, some of the backup configuration files 414 are static in nature, while others are dynamic in nature because they are modified whenever the archiving system performs a job. Ultimately, the clustered application data is the information that will be archived and/or restored by the archiving system. Virtual client application 400 facilitates the physical storage and restoration of the clustered application data as required, as managed by the archiving server application.

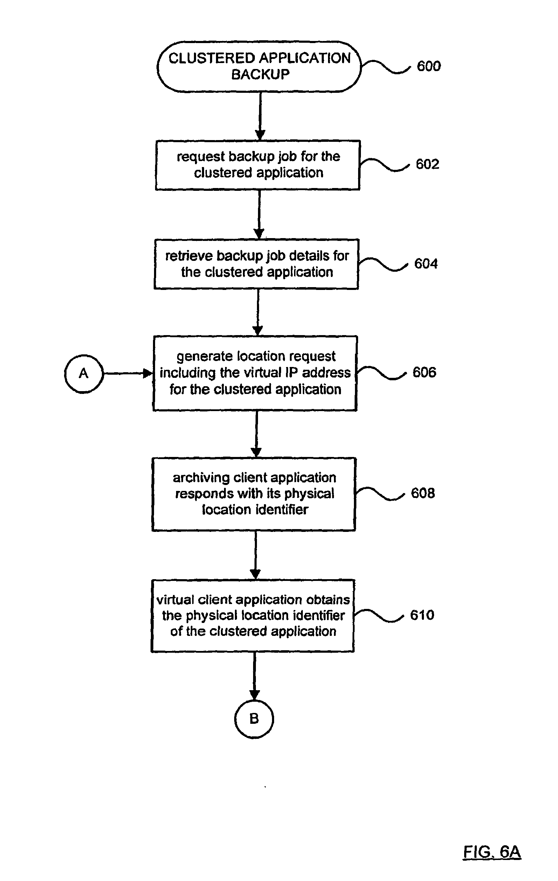

FIG. 5 is a schematic representation of an example archiving client application 500 that may be utilized in an archiving system as described herein. In practical applications, an active archiving client application 500 must reside at the same node upon which the clustered application resides. Accordingly, in an example deployment, archiving client application 500 can be initially installed at each primary or "normal" operating node for each clustered application supported by the network, and at every potential failover node for those clustered applications. Alternatively, archiving client application 500 can be dynamically installed or "pushed" to a node only when needed. In preferred practical embodiments, archiving client application 500 resides at a different node than the corresponding archiving server application. Archiving client application 500 performs a variety of archiving client functions 502 as described herein. For example, archiving client application 500 may communicate with other applications or processes in the archiving system, communicate with specific applications, operating systems, and hardware in support of the archiving procedures, transfer data from specific applications, operating systems, or hardware to a device handler, and report backup job details to a job manager maintained at the archiving server system.

Archiving client application 500 includes, maintains, or accesses a table or list 504 of virtual client names 506 and corresponding virtual client identifiers 508. The list 504 can have any number of entries, and it may be a static list generated at the time of installation/set-up, a dynamic list that is created and updated as virtual client applications are created by the archiving system, or a combination of both. For example, Virtual Client 1 is uniquely identified by a first IP address, Virtual Client 2 is uniquely identified by a second IP address, and so on. List 504 enables archiving client application 500 to identify and communicate with the proper virtual client application for its resident clustered application(s).

A virtual client name 506 may be a simple alphanumeric name for the particular virtual client application, e.g., a word or a phrase that uniquely identifies that virtual client application. The virtual client identifier 508 is a lower level identifier, e.g., an IP address, formatted for compatibility with the communication protocols used in the clustered network environment. The virtual client identifier 508 enables archiving client application 500 to identify and communicate with the proper virtual client application (as mentioned above, one archiving client application can support any number of clustered applications and, therefore, communicate with any number of virtual client applications).

Archiving client application 500 also includes a network manager 510, which handles communications with other systems, subsystems, and components in the clustered network environment via one or more network paths, communication links, or the like. For example, network manager 510 facilitates communication between archiving client application 500 and the archiving server application, the archiving server node operating system, the virtual client applications, and the like. Network managers are known to those skilled in the art and details of their operation are not addressed herein.

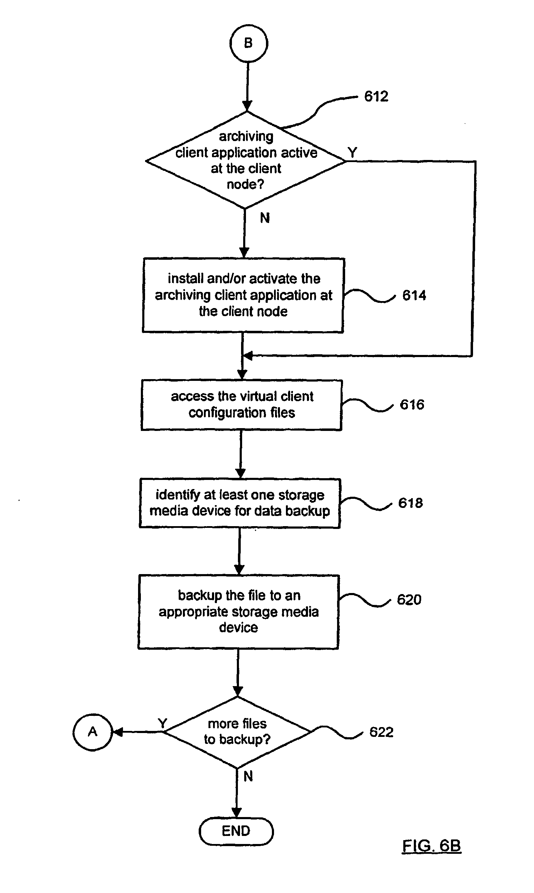

FIG. 6 is a flow diagram of a clustered application backup process 600 that may be performed by an archiving system as described herein. The various tasks performed in connection with process 600 may be performed by software, hardware, firmware, or any a combination thereof. In practical embodiments, portions of process 600 may be performed by different elements of the archiving system, e.g., the archiving server application, the virtual client application, the archiving client application, the operating systems of the respective nodes, and the like. It should be appreciated that process 600 may include any number of additional or alternative tasks, the tasks shown in FIG. 6 need not be performed in the illustrated order, and process 600 may be incorporated into a more comprehensive archiving process or program having additional functionality not described in detail herein.

The following description of process 600 assumes that the clustered application to be archived is named Clustered Application AA, which distinguishes it from other clustered applications in the network. The following description also assumes that the archiving server application is installed at an appropriate network node, and that a virtual client application has been created and configured for Clustered Application AA.

Clustered application backup process 600 may begin with a task 602, which requests a backup job for Clustered Application AA. The initial backup request may be generated by a suitable scheduler maintained by the archiving system or generated in response to a user input. In the practical embodiment, the archiving server application requests the backup job, and the request identifies Clustered Application AA. In response to the job request, backup job details can be retrieved from a suitable memory location (task 604). Such information is ultimately used by the responding archiving client application when performing the backup job.

Eventually, the archiving server application or the virtual client application for Clustered Application AA generates a location request that includes the floating identifier or virtual IP address for Clustered Application AA (task 606). The location request may also contain the backup job details retrieved during task 604, the name of Clustered Application AA, and/or the name of the respective virtual client. In this regard, the archiving server application, the respective virtual client application, and their corresponding software elements, individually or in combination, are example means for generating a location request for Clustered Application AA. In practice, this location request may be generated by a conventional program in accordance with known clustered network methodologies. This location request represents an attempt by the virtual client application to determine the current physical location of Clustered Application AA.

Assuming that Clustered Application AA does indeed reside somewhere in the network, the client node upon which Clustered Application AA resides will receive the location request, and the archiving client application resident at that node will respond to the request (task 608). In the example embodiment, task 608 can be performed by the operating system of the client node or by the archiving client application resident at the client node. The response or acknowledgement from the client node identifies the physical location of the client node, which in turn identifies the current physical location of Clustered Application AA. In the practical embodiment, the archiving system employs a naming convention that assigns different "machine names" for the various nodes within the network environment. Accordingly, the response from the client node includes the unique machine name for that particular node. The network manager(s) and/or other components of the system may handle the translation of a machine name to an address identifier (e.g., an IP address) compatible with the network or operating systems. The response from the client node is sent back to the respective virtual client application using the IP address of the virtual client application. This enables the virtual client application to obtain the physical location of Clustered Application AA (task 610). In this regard, the archiving server application, the respective virtual client application, the respective archiving client application, the respective client node, and their corresponding software elements and operating systems, individually or in combination, are example means for obtaining a physical location identifier for Clustered Application AA.

As described above in connection with FIG. 4, each virtual client application maintains a list of client nodes having active archiving client applications. In the practical embodiment, an active archiving client application must be resident at the physical client node before the actual data archiving can begin. Accordingly, the archiving system may perform a query task 612 to determine whether an archiving client application is currently active at that client node and/or to determine whether a dormant archiving client application resides at the client node. In the practical embodiment, query task 612 is performed by the respective virtual client application. If query task 612 determines that no active archiving client application resides at the node, then the archiving system initiates a task 614. During task 614, the archiving system may install an active archiving client application at the client node (if no such application resides at the node) or activate a dormant archiving client application that is already installed at the client node. In practice, the archiving server application may employ "push" techniques to dynamically install the archiving client application on demand, or it may generate a suitable message to activate the dormant archiving client application at the node.

Following task 614, or if query task 612 determines that an active archiving client application resides at the client node, the archiving system can proceed with the actual backup/archive procedures. In particular, the archiving system accesses the archiving configuration files (task 616) corresponding to Clustered Application AA. In practice, the archiving server system stores the archiving configuration files such that those files can be presented to the archiving client applications as necessary (regardless of the physical location of Clustered Application AA). In this regard, the archiving server application, the respective virtual client application, the respective archiving client application, the respective client node, and their corresponding software elements and operating systems, individually or in combination, are example means for accessing the archiving configuration files.

The configuration files dictate the actual backup procedures. In the example embodiment, the archiving server application accesses these configuration files via the virtual client application. These configuration files were described above in connection with FIG. 4.

One function of the archiving configuration files is to enable the archiving system to identify at least one storage media device for the storage of the backup data (task 618). For example, the archiving server application may identify a specific tape drive that is in close physical proximity to the client node, or it may identify a tape drive that has a high amount of available storage space. Thereafter, the archiving system performs a backup (task 620) of the current file (or files) to an appropriate storage media device, e.g., one of the media devices identified in task 618. In this regard, the archiving server application, the respective virtual client application, the respective archiving client application, the respective client node, and their corresponding software elements, individually or in combination, are example means for managing the archiving of data for Clustered Application AA in accordance with the archiving configuration files.

The actual backup or archiving procedure stores data for Clustered Application AA in accordance with the archiving configuration files maintained by the virtual client application. The archiving system can archive any number of files at this point in the process. In the example process 600 described in detail herein, however, files of Clustered Application AA are archived individually such that backup jobs can be executed even while Clustered Application AA is failing over. This feature is highly desirable because an archiving job need not be reset or repeated in the event of failover of the clustered application.

Clustered application backup process 600 may include a query task 622, which checks whether there are more files to backup for Clustered Application AA. If not, then the archiving process is complete for this iteration, and process 600 ends. If so, then process 600 is re-entered at task 606 so that another location request can be generated. In this manner, the bulk of process 600 can be repeated for each individual file (or, alternatively, repeated after any number of files have been backed up). In other words, process 600 periodically confirms the current physical location of Clustered Application AA and is capable of backing up the data for Clustered Application AA regardless of its actual physical location. Thus, if the updated physical location is the same as the last physical location, then the archiving procedure can utilize the same set of configuration files. If, on the other hand, the physical location has changed, then the archiving procedure can utilize a new set of configuration files to backup the current data or utilize the same set of configuration files but for a different archiving client application installed at a different node.

The present invention has been described above with reference to a preferred embodiment. However, those skilled in the art having read this disclosure will recognize that changes and modifications may be made to the preferred embodiment without departing from the scope of the present invention. These and other changes or modifications are intended to be included within the scope of the present invention, as expressed in the following claims.

## Claims

1. A method for archiving data for a clustered application (202) in a clustered network environment, said method comprising:
generating (606) a location request for said clustered application (202), said location request including a floating identifier (410) for said clustered application;
obtaining (610) a physical location identifier for said clustered application (202) in response to said location request;
accessing (616) archiving configuration files for said clustered application; and
archiving data (620) for said clustered application in accordance with said archiving configuration files.

2. A method according to claim 1, wherein said physical location identifier comprises a machine name for a node in said clustered network environment.

3. A method according to claim 1, wherein said floating identifier (410) comprises a virtual IP address unique to said clustered application.

4. A method according to claim 1, wherein said physical location identifier identifies a node (204,206) in said clustered network environment.

5. A method according to claim 4, further comprising:
determining (612), in response to said physical location identifier, that no active archiving client application resides at said node; and
in response to said determining step, installing (614) an active archiving client application (500) at said node prior to said archiving step.

6. A method according to claim 4, further comprising:
determining (612), in response to said physical location identifier, that an archiving client application (500) resident at said node is dormant; and
in response to said determining step, activating (614) said archiving client application at said node.

7. A method according to claim 1, wherein said archiving step identifies at least one storage media device for said data.

8. A system for archiving data for a clustered application in a clustered network environment, said system comprising:
means (200) for generating a location request for said clustered application (202), said location request including a floating identifier for said clustered application;
means (214,216) for obtaining a physical location identifier for said clustered application (202) in response to said location request;
means (212) for accessing archiving configuration files for said clustered application; and
means (210) for managing the archiving of data for said clustered application in accordance with said archiving configuration files.

9. A system according to claim 8, wherein said means for generating, said means for obtaining, said means for accessing, and said means for managing are each implemented in software.

10. A computer program product, comprising processor executable instructions operable to enable one or more computers to perform the method of any one of claims 1 to 7.

## Patentansprüche

1. Verfahren zur Archivierung von Daten für eine Cluster-Anwendung (202) in einer Cluster-Netzwerkumgebung, wobei das Verfahren die folgenden Schritte umfaßt:
Erzeugen (606) einer Standortanfrage für die Cluster-Anwendung (202), wobei die Standortanfrage eine symbolische Kennung (410) für die Cluster-Anwendung aufweist;
Erlangen (610) einer Kennung des physischen Standorts für die Cluster-Anwendung (202) als Antwort auf die Standortanfrage;
Zugreifen (616) auf Archivierungs-Konfigurationsdateien für die Cluster-Anwendung; und
Archivieren (620) von Daten für die Cluster-Anwendung gemäß den Archivierungs-Konfigurationsdateien.

2. Verfahren nach Anspruch 1, wobei die Kennung des physischen Standorts einen Maschinennamen für einen Knoten in der Cluster-Netzwerkumgebung umfaßt.

3. Verfahren nach Anspruch 2, wobei die symbolische Kennung (410) eine virtuelle IP-Adresse umfaßt, die für die Cluster-Anwendung eindeutig ist.

4. Verfahren nach Anspruch 1, wobei die Kennung des physischen Standorts einen Knoten (204, 206) in der Cluster-Netzwerkumgebung bezeichnet.

5. Verfahren nach Anspruch 4, ferner mit den folgenden Schritten:
Bestimmen (612) als Antwort auf die Kennung des physischen Standorts, daß auf dem Knoten keine aktive Archivierungsclient-Anwendung läuft; und
als Antwort auf den Bestimmungsschritt, Installieren (614) einer aktiven Archivierungsclient-Anwendung (500) auf dem Knoten vor dem aktive Archivierungsschritt.

6. Verfahren nach Anspruch 4, ferner mit den folgenden Schritten:
Bestimmen (612) als Antwort auf die Kennung des physischen Standorts, daß eine aktive Archivierungsclient-Anwendung (500) auf dem Knoten im Ruhezustand ist; und
als Antwort auf den Bestimmungsschritt, Aktivieren (614) der Archivierungsclient-Anwendung auf dem Knoten.

7. Verfahren nach Anspruch 1, wobei der Archivierungsschritt mindestens eine Speichermedienvorrichtung für die Daten identifiziert.

8. System zur Archivierung von Daten für eine Cluster-Anwendung in einer Cluster-Netzwerkumgebung, wobei das System umfaßt:
Mittel (200) zur Erzeugung einer Standortanfrage für die Cluster-Anwendung (202), wobei die Standortanfrage eine symbolische Kennung für die Cluster-Anwendung aufweist;
Mittel (214, 216) zur Erlangung einer Kennung des physischen Standorts für die Cluster-Anwendung (202) als Antwort auf die Standortanfrage;
Mittel (212) zum Zugriff auf Archivierungs-Konfigurationsdateien für die Cluster-Anwendung; und
Mittel (210) zur Abwicklung der Archivierung von Daten für die Cluster-Anwendung gemäß den Archivierungs-Konfigurationsdateien.

9. System nach Anspruch 8, wobei die Mittel zur Erzeugung, die Mittel zur Erlangung, die Mittel zum Zugriff und die Mittel zur Abwicklung in Software implementiert sind.

10. Computerprogramm-Erzeugnis mit durch einen Prozessor ausführbaren Anweisungen, die betriebsfähig sind, einem oder mehreren Computern zu ermöglichen, das Verfahren nach einem der Ansprüche 1 bis 7 durchzuführen.

## Revendications

1. Procédé pour archiver des données pour une application en grappe (202) dans un environnement de réseau en grappe, ledit procédé comprenant les étapes de :
génération (606) d'une demande de localisation pour ladite application en grappe (202), ladite demande de localisation comprenant un identifieur flottant (410) pour ladite application en grappe ;
obtention (610) d'un identifieur de localisation physique pour ladite application en grappe (202) en réponse à ladite demande de localisation ;
accès (616) aux fichiers de configuration d'archivage pour lesdites applications en grappe ; et
archivage de données (620) pour lesdites applications en grappe selon lesdits fichiers de configuration d'archivage.

2. Procédé selon la revendication 1, dans lequel ledit identifieur de localisation physique comprend un nom de machine pour un noeud dans ledit environnement de réseau en grappe.

3. Procédé selon la revendication 1, dans lequel ledit identifieur flottant (410) comprend une adresse IP virtuelle unique pour ladite application en grappe.

4. Procédé selon la revendication 1, dans lequel ledit identifieur de localisation physique identifie un noeud (204, 206) dans ledit environnement de réseau en grappe.

5. Procédé selon la revendication 4, comprenant en outre les étapes de :
détermination (612), en réponse audit identifieur de localisation physique, qu'aucune application de client d'archivage active ne réside sur ledit noeud ; et
en réponse à ladite étape de détermination, installation (614) d'une application de client d'archivage active (500) sur ledit noeud avant ladite étape d'archivage.

6. Procédé selon la revendication 4, comprenant en outre les étapes de :
détermination (512), en réponse au identifieur de localisation physique, qu'une application de client d'archivage (500) résidant sur ledit noeud est inactive ; et
en réponse à ladite étape de détermination, activation (614) de ladite application de client d'archivage sur ledit noeud.

7. Procédé selon la revendication 1, dans lequel ladite étape d'archivage identifie au moins un dispositif de média de stockage pour lesdites données.

8. Système pour archiver des données pour une application en grappe dans un environnement de réseau en grappe, ledit système comprenant :
un moyen (200) pour générer une demande de localisation pour ladite application en grappe (202), ladite demande de localisation incluant un identifieur flottant pour ladite application en grappe ;
un moyen (214, 216) pour obtenir un identifieur de localisation physique pour ladite application en grappe (202) en réponse à ladite demande de localisation ;
un moyen (212) pour accéder aux fichiers d'archivage de configuration pour ladite application en grappe ; et
un moyen (210) pour gérer l'archivage des données pour ladite application en grappe selon lesdits fichiers de configuration d'archivage.

9. Système selon la revendication 8, dans lequel ledit moyen pour générer, ledit moyen pour obtenir, ledit moyen pour accéder, et ledit moyen pour gérer sont chacun implémentés par logiciel.

10. Produit de programme informatique, comprenant des instructions exécutables par processeur utilisables pour activer un ou plusieurs ordinateurs pour réaliser le procédé d'une quelconque des revendications 1 à 7.
